# EUROPÄISCHE PATENTSCHRIFT

(11) **EP 1 666 831 B1**
(45) Veröffentlichungstag und Bekanntmachung des Hinweises auf die Patenterteilung: **29.04.2009**
(21) Anmeldenummer: 05110668.0
(22) Anmeldetag: 11.11.2005
(51) Int. Cl.: G01B 5/00, A61C 13/12

(54) **Halter zur Halterung eines Zahnmodells zur Herstellung von Rotationsaufnahmen sowie Haltevorrichtung**
Holder for mounting a tooth model in order to obtain images by rotation, as well as holding device
Support pour tenir un modèle dentaire afin d'obtenir des images par rotation, ainsi que porte-support

(30) Priorität: 12.11.2004 DE 102004054880
(43) Veröffentlichungstag der Anmeldung: 07.06.2006
(73) Patentinhaber: Sirona Dental Systems GmbH, 64625 Bensheim (DE)
(72) Erfinder: Eiff, Wolfgang, 64646 Heppenheim (DE); Mougoui, Nadjaf, 64521 Groß-Gerau (DE)
(74) Vertreter: Sommer, Peter

(56) Entgegenhaltungen:
- EP-A- 1 088 620
- EP-A- 1 142 541
- DE-A- 19 708 762
- DE-A1- 1 552 492
- DE-B- 1 079 923
- US-A- 5 342 696

## Beschreibung

Die Erfindung betrifft einen Halter für ein Zahnmodell zur Vermessung des Zahnmodells, das ein Aufnahmeteil für das Modell sowie einen mit dem Aufnahmeteil verbundenen Schaft zur Befestigung in einer Halterung einer Vermessungseinrichtung beinhaltet, wobei der Schaft ein Kupplungsteil aufweist, das einen Konus umfasst. Weiterhin betrifft die Erfindung eine Haltevorrichtung für einen Halter oben genannter Art, die einen Dorn zum Aufstecken des Halters aufweist, wobei der Dorn als Gegenkonus ausgebildet ist.

### Stand der Technik

Dokument DE 19 708 762 offenbart eine Haltevorrichtung zur Positionierung und zum Tragen von Bauteilen bei der Messung auf einer Meßmaschine.

Es sind im Stand der Technik Halter für Zahnmodelle bekannt, die bei der Vermessung der Zahnmodelle verwendet werden. Abhängig von der Art der Vermessung sowie der Größe der zu vermessenden Zahnmodelle gibt es Halter, die für die Halterung eines Einzelzahnmodells gedacht sind und solche, die einen ganzen Kieferabdruck halten können.

Oftmals ist es erwünscht, ein Einzelzahnmodell von mehreren Seiten gleichzeitig zu vermessen. Dafür sind im Stand der Technik Halter bekannt, die drehbar bezüglich der Bildaufnahmeeinheit befestigt werden können. Die Firma etkon AG vertreibt Vermessungseinrichtungen, die fest in das Gerät eingebaute Halter aufweisen, die bezüglich der Bildaufnahmeeinheit drehbar sind. Die Halter weisen eine Knetmasse auf, in der die zu vermessenden Zahnmodelle befestigt werden. Nachteilig ist hier die starre Befestigung der Halter im Gerät. Darüber hinaus sind von der Firma Sirona Dental Systems GmbH Töpfchenhalter bekannt, die mittels einer geschraubten Klemmvorrichtung drehbar auf einer Haltevorrichtung befestigt werden können. Die Montage und Demontage eines solchen Halters erfordert erhöhten Aufwand.

Es ist daher die Aufgabe der Erfindung, einen Halter für ein Zahnmodell anzugeben, der eine einfache, sichere und genaue Befestigung und Positionierung des Halters in der Vermessungseinrichtung ermöglicht und der schmutzempfindlich ist und niedrige Herstellungskosten verursacht.

### Darstellung der Erfindung

Diese Aufgabe wird erfindungsgemäß gelöst durch einen Halter gemäß dem Anspruch 1 sowie einer Haltevorrichtung gemäß dem Anspruch 10. Der erfindungsgemäße Halter für ein Zahnmodell zur Vermessung des Zahnmodells enthält ein Aufnahmeteil für das Zahnmodell sowie einen mit dem Aufnahmeteil verbundenen Schaft zur Befestigung in eine Halterung einer Vermessungseinrichtung, wobei der Schaft ein Kupplungsteil aufweist, das einen Konus umfasst. Der Halter kann mit dem Konus auf eine entsprechend gestaltete Halterung einer Vermessungseinrichtung aufgesteckt werden, wobei der Halter durch die vom Konus vorgegebene Geometrie sowohl axial als auch radial in der vorgesehenen Richtung fixiert wird und darüber hinaus ein sehr guter Kraftschluss zwischen der Halterung und dem Halter besteht.

Der Konus ist als Innenkonus ausgebildet, der an dem Aufnahmeteil abgewandten Ende des Schaftes angeordnet ist. Die Ausbildung des Konus als Innenkonus hat einerseits den Vorteil, dass das entsprechende Gegenteil als Außenkonus gestaltet werden kann und sich in diesem, räumlich nach oben angeordneten Gegenstück kein Schmutz ansammelt.

Der Konus hat einen Winkel zwischen zwei und neun Grad. Ein zu großer Konuswinkel bewirkt einen schlechten Kraftanschluss und ein zu kleiner Winkel eine schlechte Zentrierung.

Der Schaft ist im Bereich des Konus elastisch ausgebildet. Dann ist es möglich, den Reibschluss zwischen Halter und Halterung zu verbessern.

Die Elastizität kann auch durch einen Schlitz im Schaft im Bereich des Konus erreicht werden.

Vorteilhafterweise sind das Aufnahmeteil, der Schaft und das Kupplungsteil rotationssymmetrisch gestaltet. Dann besteht bezüglich der Befestigung des Zahnmodells auf dem Halter keine Vorzugsrichtung und der Halter kann in beliebiger Orientierung in der Halterung der Vermessungseinrichtung befestigt werden.

Vorteilhafterweise weisen das Aufnahmeteil für das Zahnmodell, der Schaft und das Kupplungsteil im Wesentlichen dieselbe Rotationsachse auf. Dies gewährleistet eine radial ortsfeste Positionierung des zu vermessenden Zahnmodells bei der Rotation.

Vorteilhafterweise befindet sich an dem Innenkonus ein Zentrierabschnitt. Ein solcher Zentrierabschnitt kann beispielsweise durch einen sich an den konischen Bereich anschließenden zylindrischen Hohlraum gebildet werden. Damit kann eine noch bessere Zentrierung des Halters auf der Halterung erreicht werden.

Vorteilhafterweise ist das Aufnahmeteil für das Zahnmodell als Töpfchen gestaltet. Ein solcher Halter erlaubt eine Vielzahl von unterschiedlichen Befestigungsmöglichkeiten.

Vorteilhafterweise enthält das Töpfchen eine formbare Masse, in der das Zahnmodell befestigbar ist. So ist es möglich, ein zu vermessendes Zahnmodell lösbar und doch ausreichend sicher für die Vermessung in dem Halter zu befestigen und eine Positionierung gegebenenfalls per Hand zu korrigieren.

Ein weiterer Gegenstand der Erfindung betrifft eine Haltevorrichtung für einen Halter, wie er zuvor offenbart wurde. Die Haltevorrichtung weist einen Dorn zum Aufstecken des Halters auf, wobei der Dorn als Gegenkonus zum Konus des Halters ausgebildet ist, nämlich als Außenkonus. Eine solche Haltevorrichtung ermöglicht eine sehr einfache, sichere und exakte Befestigung des Halters.

Der Dorn ist federnd gelagert, wobei der Federweg des Dorns durch einen Anschlag begrenzt ist. Beim Aufsetzen des Halters auf den Dorn gibt dieser, abhängig von der Kraft, mit der der Halter aufgesetzt wird, nach und berührt bei Erreichen der vorgesehenen Aufsteckkraft den Anschlag. Das Aufsetzen wird in der Folge immer mit derselben konstanten Kraft vorgenommen, wodurch der Halter immer in der gleichen Lage positioniert wird.

Vorteilhafterweise ist der Winkel des Konus des Dorns so groß wie der Winkel des Konus des Halters, wobei eine Toleranz kleiner oder gleich 1 Grad möglich ist. Dies gewährt einen sicheren Sitz des Halters auf dem Dorn mit einer möglichst großen Reibfläche.

Vorteilhafterweise ist der Dorn mit einem Zentrierstift ausgestattet, der zum Konus benachbart angeordnet ist. Dann ist es möglich, eine noch exaktere Positionierung des Halters zu ermöglichen.

### Kurzbeschreibung der Zeichnungen

Das erfindungsgemäße Verfahren wird anhand der Zeichnung erläutert. Es zeigen:
- Fig. 1A: ein erfindungsgemäßer Halter in einem Längsschnitt,
- Fig. 1B: den Halter von oben betrachtet, die
- Fig. 2: eine alternative Ausführungsform eines Halters in perspektivischer Ansicht, die
- Fig. 3: die erfindungsgemäße Haltevorrichtung mit Halter, die
- Fig. 4: eine Haltevorrichtung mit einer modifizierten Form des Dorns und die
- Fig. 5: die Haltevorrichtung mit eingeschobenem Halter. Ausführungsformen der Erfindung

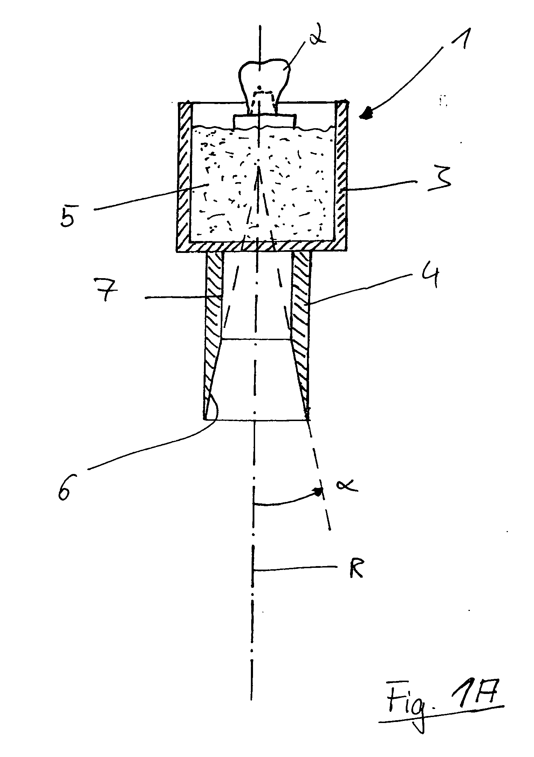

Die **Fig. 1A** zeigt einen Halter 1 für ein Zahnmodell 2, der einen zylindrischen, topfförmigen Teil 3 mit einem daran angebrachten Schaft 4 aufweist. Das Zahnmodell 2 kann auch ein präparierter Stumpf sein (gestrichelt dargestellt). Der Schaft ist aus einem elastischen Material gefertigt, das in der Lage ist, bei Dehnbelastungen geringfügig nachzugeben. Das Töpfchen 3 ist mit einer formbaren Masse 5, beispielsweise einer Knetmasse, zum Befestigen und Positionieren des Zahnersatzteils 2 gefüllt. An dem dem Töpfchen abgewandten Ende des Schafts 4 ist ein Innenkonus 6 vorgesehen, der zur Verdeutlichung einen Öffnungswinkel α von 12 Grad aufweist. Hinter dem konusförmig verlaufenden Ende des Schafts ist ein als hohles Schaftstück ausgebildeter Zentrierabschnitt 7 vorgesehen, um einem Dorn Platz zu bieten und um die Elastizität des Schafts 4 zu verbessern. Das Töpfchen 3, der Schaft 4, der Konus 6 und der Zentrierabschnitt 7 sind rotationssymmetrisch zur Rotationsachse R angeordnet.

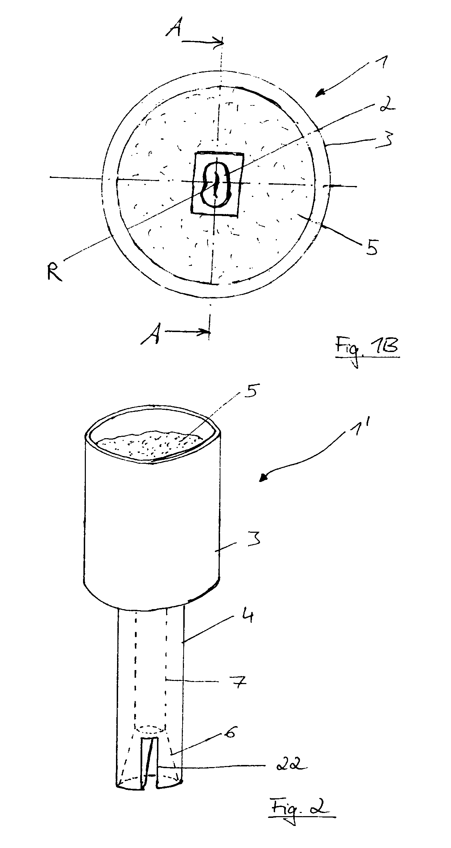

Die **Fig. 1B** zeigt den Halter 1 in einer Draufsicht. Das Töpfchen 3 ist zylindrisch gestaltet, wobei die Zylinderachse gleichzeitig die Rotationsachse R darstellt. Das zu vermessende Zahnmodell 2 ist so in die Knetmasse 5 eingebettet, dass der Objektmittelpunkt des Zahnmodells 2 in etwa mit der Rotationsachse R übereinstimmt.

In **Fig. 2** ist ein Halter 1' in einer alternativen Ausführungsform gezeigt. Der Schaft 4 weist hier zur Erzeugung einer Flexibilität einen Schlitz 22 auf, der sich im Bereich des Konus 6 erstreckt.

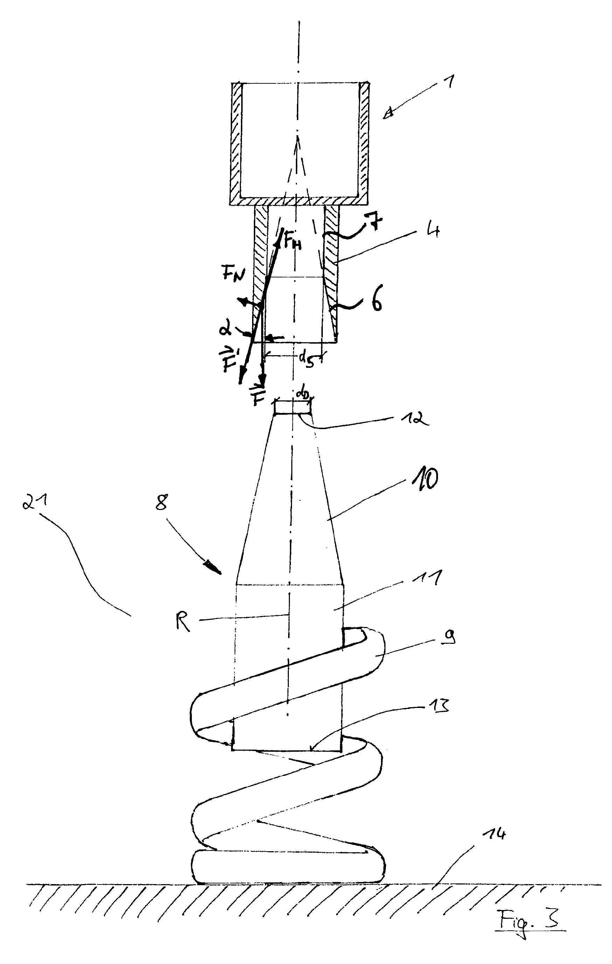

Die **Fig. 3** zeigt eine erfindungsgemäße Haltevorrichtung 21, besteht aus einem Halter 1 und einem Dorn 8, der mittels einer Feder 9 federnd gelagert ist. Der Dorn 8 ist in einen konischen Bereich 10 und einen zylindrischen Bereich 11 aufgeteilt. Die Spitze 12 des konischen Bereichs hat einen Durchmesser d_{D} und ist dabei kleiner als der Durchmesser d_{S} des Zentrierabschnitts 7 des Schafts 4.

Beim Aufstecken des Halters 1 auf den Dorn 8 wird auf den Dorn 8 eine in axialer Richtung wirkende Kraft ausgeübt, die dazu führt, dass die Feder 9 zusammengedrückt wird. Der Dorn 8 weicht gemäß der Krafteinleitung nach hinten aus, bis seine Unterseite 13 einen Anschlag 14 berührt. Die Kraft, die nötig ist, um den Halter 1 auf den Dorn 8 aufzuschieben, ist bis zum Erreichen des Anschlags 14 immer konstant. So kann erreicht werden, dass der Halter 1 immer mit einer definierten Kraft auf den Dorn 8 aufgeschoben wird.

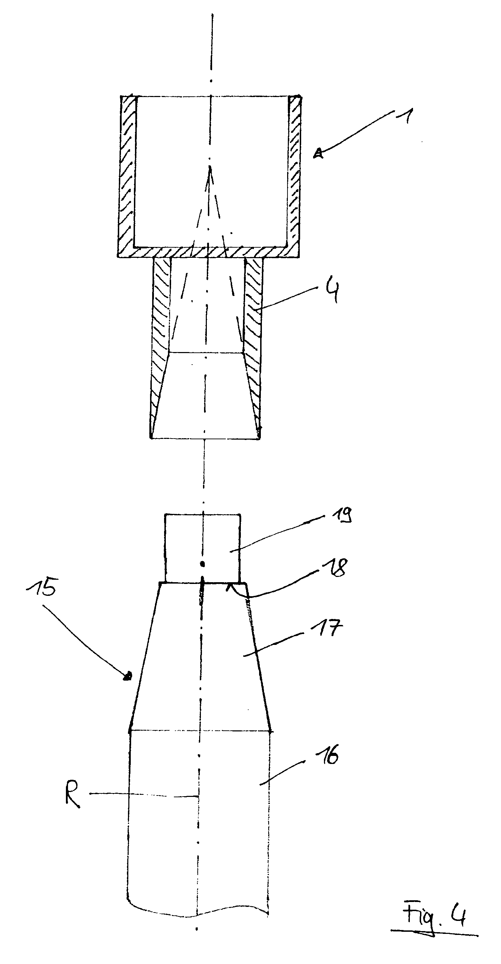

Die **Fig. 4** zeigt eine alternative Ausgestaltung des Dorns 15 der Haltevorrichtung 21. Der Dorn 15 weist in diesem Fall drei Bereiche auf. An den zylindrischen Bereich 16 schließt sich ein konischer Bereich 17 an, auf dessen Vorderfläche 18 ein Zentrierstift 19 angebracht ist. Der Zentrierstift 19 ist zylindrisch und hat im Wesentlichen denselben Durchmesser wie der Durchmesser dₛ Zentrierabschnitt 7 des Schaftes 4. Der Übergang zwischen dem konischen Bereich 17 und dem Zentrierstift 19 ist mit einer Stufe versehen, die dafür sorgt, dass beim Zusammenschieben des Halters 1 und des Dorns 15 keine Fehlpositionierungen aufgrund der ansonsten erforderlichen komplett bündigen Anlage der Gegenflächen gibt.

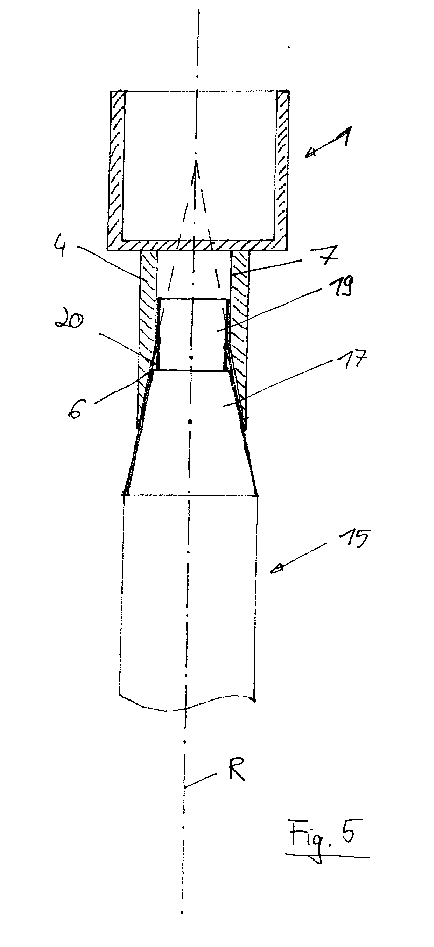

Die **Fig. 5** zeigt den Halter 1 aufgeschoben auf den Dorn 15. Zwischen dem Zentrierstift 19, dem konischen Bereich 17 und dem konischen Bereich 6 des Schafts 4 entsteht durch die abgestuften Durchmesser ein Hohlraum 20, in dem kein Kontakt zwischen dem Halter 1 und dem Dorn 15 besteht.

### Bezugszeichenliste

- 1: Halter
- 1': Halter in alternativer Ausführungsform
- 2: Zahnmodell
- 3: Töpfchen
- 4: Schaft
- 6: Konischer Bereich des Schafts
- 7: Zentrierabschnitt
- 8: Dorn
- 9: Feder
- 10: Konischer Bereich
- 11: Zylindrischer Bereich
- 12: Spitze des Dorns
- 13: Unterseite
- 14: Anschlag
- 15: Dorn
- 16: Zylindrischer Bereich
- 17: Konischer Bereich
- 19: Zentrierstift
- 20: Hohlraum
- 21: Haltevorrichtung
- 22: Schlitz
- R: Rotationsachse
- d_{D}: Durchmesser der Dornspitze
- d_{S}: Durchmesser des Zentrierabschnitts

## Patentansprüche

1. Halter (1) für ein Zahnmodell (2) zur Vermessung des Zahnmodells (2), enthaltend ein Aufnahmeteil (3) für das Zahnmodell (2) sowie einen mit dem Aufnahmeteil (3) verbundenen Schaft (4) zur Befestigung in einer Halterung (8, 15) einer Vermessungseinrichtung, wobei der Schaft (4) ein Kupplungsteil aufweist, das einen Konus (6) umfasst, wobei der Konus (6) ein Innenkonus ist, der an dem dem Aufnahmeteil (3) abgewandten Ende des Schaftes (4) angeordnet ist, **dadurch gekennzeichnet, dass** der Konus (6) einen Winkel von 1 bis 15 Grad aufweist und wobei der Schaft (4) im Bereich des Konus (6) elastisch oder geschlitzt ausgebildet ist.

2. Halter (1) nach Anspruch 1, **dadurch gekennzeichnet, dass** das Aufnahmeteil (3) für das Zahnmodell (2), der Schaft (4) und das Kupplungsteil (6) rotationssymmetrisch gestaltet sind.

3. Halter (1) nach Anspruch 2, **dadurch gekennzeichnet, dass** das Aufnahmeteil (3) für das Zahnmodell (2), der Schaft (4) und das Kupplungsteil (6) im Wesentlichen dieselbe Rotationsachse (R) haben.

4. Halter (1) nach einem der Ansprüche 1 bis 3, **dadurch gekennzeichnet, dass** sich an dem Innenkonus (6) ein Zentrierabschnitt (7) anschließt.

5. Halter (1) nach einem der Ansprüche 1 bis 4, **dadurch gekennzeichnet, dass** das Aufnahmeteil (3) für das Zahnmodell (2) als Töpfchen (3) gestaltet ist.

6. Halter (1) nach Anspruch 5, **dadurch gekennzeichnet, dass** in dem Töpfchen (3) eine formbare Masse (5) enthalten ist, in der das Zahnmodell (5) befestigbar ist.

7. Haltevorrichtung (21) für einen Halter (1) nach einem der Ansprüche 1 bis 6, aufweisend einen Dorn (8, 15) zum Aufstecken des Halters (1), **dadurch gekennzeichnet, dass** der Dorn (8, 15) als Gegenkonus zum Konus des Halters (1) ausgebildet ist, nämlich als Außenkonus (10, 17), wobei der Dorn (8, 15) federnd gelagert ist und der Federweg durch einen Anschlag (14) begrenzt ist.

8. Haltevorrichtung (21) nach Anspruch 7, **dadurch gekennzeichnet, dass** der Winkel des Konus (10, 17) des Dorns (8, 15) dem Winkel des Konus (6) des Halters (1) mit einer Toleranz kleiner oder gleich 1 Grad entspricht.

9. Haltevorrichtung (21) nach einem der Ansprüche 7 bis 8, **dadurch gekennzeichnet, dass** der Dorn (15) einen Zentrierstift (19) aufweist, der zum Konus (17) benachbart angeordnet ist.

## Claims

1. A holder (1) for a tooth model (2) for the purpose of measuring said tooth model (2), comprising receiving part (3) for the tooth model (2) and also a shaft (4) connected to said receiving part (3) and adapted for attachment in a mount (8, 15) of a measuring device wherein said shaft (4) has a coupling component that comprises a cone (6), which is an inner cone which is disposed at that end of said shaft (4) which is remote from said receiving part (3), **characterized in that** said cone (6) exhibits an angle of taper of from 1 to 15 degrees and said shaft (4) is resilient or slit in the region of said cone (6).

2. A holder (1) as defined in claim 1, **characterized in that** said receiving part (3) for the tooth model (2), said shaft (4), and said coupling component (6) are rotationally symmetrical.

3. A holder (1) as defined in claim 2, **characterized in that** said receiving part (3) for said tooth model (2), said shaft (4), and said coupling component (6) have substantially the same axis of rotation (R).

4. A holder (1) as defined in any one of claims 1 to 3, **characterized in that** said inner cone (6) is adjoined by a centering section (7).

5. A holder (1) as defined in any one of claims 1 to 4, **characterized in that** said receiving part (3) for the tooth model (2) is in the form of a potty (3).

6. A holder (1) as defined in claim 5, **characterized in that** in said small pot (3) a reshapeable compound (5) is present in which said tooth model (5) can be fixed.

7. A holding device (21) for a holder (1) as defined in any one of claims 1 to 6, comprising a mandrel (8, 15) for the attachment of said holder (1), **characterized in that** said mandrel (8, 15) is in the form of a counter cone to the cone of said holder (1), namely an outer cone (10, 17), said mandrel (8, 15) is spring-mounted, and the spring travel is limited by a stop (14).

8. A holding device (21) as defined in claim 7, **characterized in that** the angle of the cone (10, 17) of said mandrel (8, 15) is equal to the angle of the cone (6) of said holder (1) within a tolerance of 1 degree or less.

9. A holding device (21) as defined in claim 7 or claim 8, **characterized in that** said mandrel (15) has a centering pin (19) which is disposed adjacent to said cone (17).

## Revendications

1. Support pour un modèle dentaire (2), pour le mesurage du modèle de dent (2), comprenant une pièce de réception (3) pour le modèle de dent (2) ainsi qu'une tige (4) reliée à la pièce de réception (3) pour la fixation dans un support (8, 15) d'un dispositif de mesurage, dans lequel la tige (4) comporte un élément d'accouplement comprenant un cône (6), le cône (6) étant un cône interne disposé à l'extrémité de la tige (4) qui est opposée à la pièce de réception (3), **caractérisé en ce que** le cône (6) présente un angle de 1 à 15 degrés et la tige (4) est formée de façon élastique ou encore à fente, dans la région du cône (6).

2. Support (1) selon la revendication 1, **caractérisé en ce que** la pièce de réception (3) pour le modèle de dent (2), la tige (4) et l'élément d'accouplement (6) sont conçus en symétrie de révolution.

3. Support (1) selon la revendication 2, **caractérisé en ce que** la pièce de réception (3) pour le modèle de dent (2), la tige (4) et l'élément d'accouplement (6) possèdent essentiellement le même axe de rotation (R).

4. Support (1) selon l'une des revendications 1 à 3, **caractérisé en ce qu'**une section de centrage (7) se trouve à la suite du cône interne (6).

5. Support selon l'une des revendications 1 à 4, **caractérisé en ce que** la pièce de réception (3) pour le modèle dentaire (2) est conçue comme un gobelet (3).

6. Support (1) selon la revendication 5, **caractérisé en ce que** le gobelet (3) contient une masse malléable (5), dans laquelle le modèle de dent (2) peut être fixé.

7. Porte-support (21) pour un support (1) selon l'une des revendications 1 à 6, comportant un mandrin (8, 15) destiné à porter le support (1), **caractérisé en ce que** le mandrin (8, 15) est conçu comme un contre-cône par rapport au cône du support (1), c'est-à-dire comme un cône externe (la, 17), dans lequel le mandrin (8, 15) est monté de façon élastique, la course élastique étant délimitée par une butée (14).

8. Porte-support (21) selon la revendication 7, **caractérisé en ce que** l'angle du cône (10, 17) du mandrin (8, 15) correspond à l'angle du cône (6) du support (1), avec une marge de tolérance inférieure ou égale à 1 degré.

9. Porte-support (21) selon l'une des revendications 7 à 8, **caractérisé en ce que** le mandrin (15) comporte une tige de centrage (19) disposée à côté du cône (17).
